# EUROPEAN PATENT APPLICATION

(11) **EP 4 358 436 A1**
(43) Date of publication of application: **24.04.2024**
(21) Application number: 22201851.7
(22) Date of filing: 17.10.2022
(51) Int. Cl.: H04B 10/272

(54) **APPARATUS AND METHOD FOR TRANSMITTING SEGMENTS FOR A DOWNSTREAM TRANSMISSION AND APPARATUS AND METHOD FOR RECEIVING SEGMENTS OF A DOWNSTREAM TRANSMISSION FOR A PASSIVE OPTICAL NETWORK**

(71) Applicant: Nokia Solutions and Networks Oy, 02610 Espoo (FI)
(72) Inventor: Verplaetse, Michiel, 9810 Nazareth (BE); Lefevre, Yannick, 3001 Heverlee (BE)
(74) Representative: DREISS Patentanwälte PartG mbB

(57) **Abstract**

A method and an apparatus (100) for transmitting segments for a downstream transmission for a passive optical network, wherein the method comprises transmitting a first segment (304) of a first modulation format, a second segment (306) of a second modulation format and a third segment (308) of a third modulation format, wherein the second segment (306) is transmitted between the first segment (304) and the third segment (308), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point. A method and an apparatus for receiving segments of a downstream transmission in a passive optical network, wherein the method comprises receiving a first segment (304) of a first modulation format, a second segment (306) of a second modulation format and a third segment (308) of a third modulation format, using a first mode of operation for receiving the first segment (304), using a second mode of operation for receiving the third segment (308), switching from the first mode of operation to the second mode of operation during receiving the second segment (306), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point.

## Description

### Field of the invention

The disclosure relates to an apparatus and a method for transmitting segments for a downstream transmission and an apparatus and a method for receiving segments of a downstream transmission for a passive optical network.

### Background

Next-generation passive optical networks (PONs) provide broadband access. PON have a point-to-multi-point (P2MP) topology, in which one optical line terminal (OLT) at the network side is used to connect to a multitude of optical network units (ONUs) at the user side by means of an optical distribution network (ODN) or fiber plant that contains optical fibers and splitters, but no active components.

In a flexible modulation PON, the OLT can exploit the margins in the ODN to increase overall throughput in the PON system. It can do so by using different modulation formats. A downstream signal in the flexible modulation PON comprises segments of data, where different segments can use different modulation formats.

### Summary

A method of transmitting segments for a downstream transmission for a passive optical network comprises transmitting a first segment of a first modulation format, a second segment of a second modulation format and a third segment of a third modulation format, wherein the second segment is transmitted between the first segment and the third segment, wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point. The levels of the second set are part of both the first set and the third set. This way, the first segment and the second segment can be transmitted in a first mode of operation at the transmitter and the second segment and the third segment can be transmitted in a second mode of operation at the transmitter. This provides a reconfigurable solution, i.e. a solution that can reconfigure the transmitter during the transmission of the second segment. In this way, the switching of the mode does not have to happen exactly at the end of the first segment but only somewhere within the second segment. This strongly reduces the timing requirements on a switching signal to control the mode of operation, so that a low speed switching signal can be used. It also strongly reduces the speed at which the reconfiguration of the transmitter from the first mode to the second mode has to happen. This enables reducing the complexity of the transmitter.

The transmission of the segments also enables a simplified receiver structure. The first segment and the second segment can be received in a first mode of operation at the receiver and the second segment and the third segment can be received in a second mode of operation at the receiver. This provides a reconfigurable solution, i.e. a solution that can reconfigure the receiver during the reception of the second segment. In this way, the switching of the mode does not have to happen exactly at the end of the first segment but only somewhere within the second segment. This strongly reduces the timing requirements on a switching signal to control the mode of operation, so that a low speed switching signal can be used. It also reduces the speed at which the reconfiguration of the receiver from the first mode to the second mode has to happen. This enables reducing the complexity of the receiver.

According to some embodiment, the method of transmitting segments for the downstream transmission comprises using a first mode of operation for transmitting the first segment, using a second mode of operation for transmitting the third segment, switching from the first mode of operation to the second mode of operation during the transmission of the second segment. The switching requires a shorter time duration than the transmission of the second segment. Switching during the transmission of the second segment avoids loss of data that otherwise may occur during the switching. For instance, switching during the third segment would lead to a loss of data for some of the symbols of the third modulation format.

According to some embodiment of the method of transmitting segments for the downstream transmission, the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

According to some embodiment, the method of transmitting segments for the downstream transmission comprises applying the transmitting depending on a requirement of a receiver. This way, the transmitter matches the requirement of the receiver. This avoids a loss of data that may otherwise occur during misconfigured transmitter or a reconfiguration of the transmitter according to the requirement of the receiver during the transmission.

According to some embodiment of the method of transmitting segments for the downstream transmission, a first gain is assigned to a first signal stream, wherein a second gain is assigned to a second signal stream, wherein in the first mode of operation a third gain is additionally applied to the first signal stream for transmitting in the four-level pulse amplitude modulation format and in the second mode of operation the third gain is additionally applied to the second signal stream for transmitting in the three-level pulse amplitude modulation format. Using the third gain differently in the different modes of operation reduces the complexity of the hardware for transmitting.

According to some embodiments of the method of transmitting segments for the downstream transmission, the first, second and third gain are related to each other according to the ratios 3, 2, and 1.

An apparatus for transmitting segments for a downstream transmission for a passive optical network is configured for transmitting a first segment of a first modulation format, a second segment of a second modulation format and a third segment of a third modulation format, wherein the apparatus is configured to transmit the second segment between the first segment and the third segment, wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point. This way, the transmitter can transmit the first segment and the second segment in the one mode of operation and the second segment and the third segment in the other mode of operation. This enables switching modes during the transmission of the second segment. This means, the switching does not have to occur at the end of the first segment but can be done during the second segment without loss of data. The switching can be done without loss of data and without the need for high-speed switching signals.

According to some embodiments of the apparatus for transmitting segments for the downstream transmission is configured for acquiring a requirement for transmitting the second segment between the first segment and the third segment in order to enable the switching. This enables the transmitter to adjust to the requirements of the receiver.

According to some embodiment of the apparatus for transmitting segments for the downstream transmission, the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

According to some embodiment, the apparatus for transmitting segments for the downstream transmission is configured for applying the transmitting depending on a requirement of a receiver.

According to some embodiment, the apparatus for transmitting segments for the downstream transmission is configured for using a first mode of operation for transmitting the first segment, using a second mode of operation for transmitting the third segment, switching from the first mode of operation to the second mode of operation during the transmission of the second segment. This enables the transmitter to avoid loss of data that otherwise may occur during the switching.

According to some embodiment, the apparatus for transmitting segments for the downstream transmission is configured to assign a first gain to a first signal stream, a second gain to a second signal stream, and to apply a third gain additionally to the first signal stream for transmitting in the four-level pulse amplitude modulation format and to apply a fourth gain additionally to the second signal stream for transmitting in the three-level pulse amplitude modulation format. This reduces the complexity of the hardware of the transmitter.

A method of receiving segments of a downstream transmission in a passive optical network comprises receiving a first segment of a first modulation format, a second segment of a second modulation format and a third segment of a third modulation format, using a first mode of operation for receiving the first segment, using a second mode of operation for receiving the third segment, switching from the first mode of operation to the second mode of operation during receiving the second segment, wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point. Due to this scheduling, the reconfiguration can be done without loss of data or the need of high-speed switching signal. It also reduces the speed at which the reconfiguration of the receiver from the first mode to the second mode has to happen, and thus enables reducing the complexity of the receiver.

According to some embodiment of the method of receiving segments of the downstream transmission, the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

According to some embodiment, the method of receiving segments of the downstream transmission comprises using a first set of decision thresholds in the first mode of operation, and using a second set of decision thresholds in the second mode of operation. This enables a reconfigurable reception that avoids loss of data and requires no high speed switching signals.

According to some embodiment, the method of receiving segments of the downstream transmission comprises sending a requirement for transmitting the second segment between the first segment and the third segment in order to enable the switching. This avoids loss of data during a reconfiguration of the receiver during the reception of the segments.

An apparatus for receiving segments of a downstream transmission in a passive optical network is configurable for receiving a first segment of a first modulation format, a second segment of a second modulation format and a third segment of a third modulation format, using a first mode of operation for receiving the first segment, using a second mode of operation for receiving the third segment, switching from the first mode of operation to the second mode of operation during receiving the second segment, wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point. The receiver is capable of coping with a reconfiguration at the transmitter. This enables reception without loss of data or the need of high-speed switching signal.

According to some embodiment of the apparatus for receiving segments of the downstream transmission, the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

According to some embodiment, the apparatus for receiving segments of the downstream transmission is configured for using a first set of decision thresholds in the first mode of operation, and using a second set of decision thresholds in the second mode of operation. This enables a reconfiguration of the receiver during the reception of the segments. This avoids loss of data and requires no high speed switching signals.

According to some embodiment, the apparatus for receiving segments of the downstream transmission is configured for sending a requirement for transmitting the second segment between the first segment and the third segment in order to enable the switching. This enables to receiver to inform the transmitter of the requirement, i.e. that it needs a reconfiguration time, e.g. for specific modulation formats.

### Brief description of the figures

Fig. 1 schematically depicts a topology of a passive optical network,
Fig. 2 depicts different modulation formats,
Fig. 3 schematically depicts an apparatus for transmitting segments for a downstream transmission for a passive optical network.
Fig. 4 schematically depicts an apparatus for receiving segments of a downstream transmission for a passive optical network.
Fig. 5 depicts slicer levels for different modulation format,
Fig. 6 schematically depicts a scheduling of segments in the downstream transmission.
Fig. 7 depicts a sequence diagram.
Fig. 8 depicts a control signal.

### Description of the embodiments

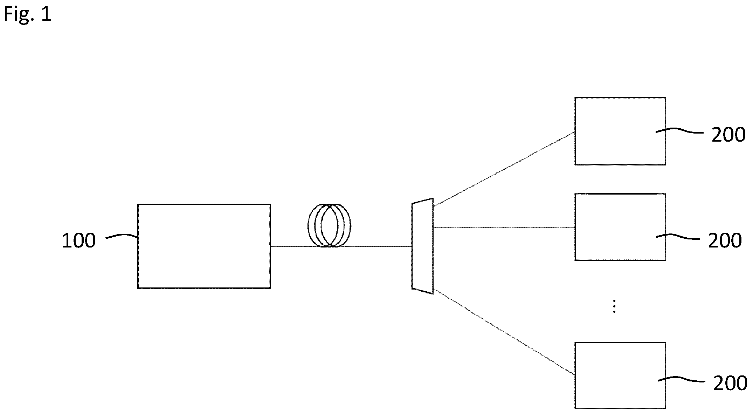

Figure 1 schematically depicts a topology of a passive optical network (PON) system. In PON systems, a continuous mode signal is transmitted in downstream from an optical line termination (OLT), 100, to at least one optical network unit (ONU), 200.

The PON may be configured for a first modulation format, second modulation format and a third modulation format.

The first modulation format comprises a first set of constellation points. The second modulation format comprises a second set of constellation points. The third modulation format comprises a third set of constellation points.

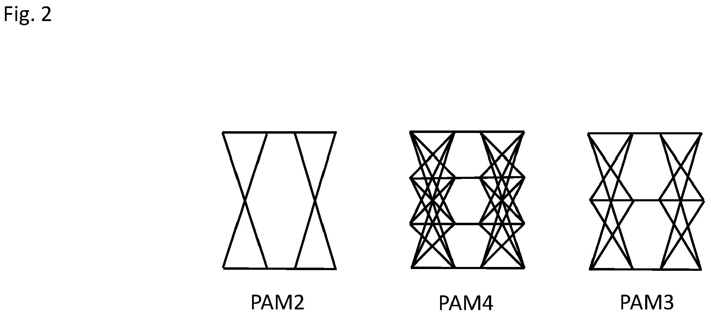

The second set is comprised in an intersection of the first set and the third set. The first set and the third set differ by at least one constellation point. According to an example, depicted in figure 2, the first modulation format corresponds to a four-level pulse amplitude modulation, (PAM4) the second modulation format corresponds to a two-level pulse amplitude modulation (PAM2) and the third modulation format corresponds to a three-level pulse amplitude modulation (PAM3).

According to an example, the first modulation format corresponds to PAM3, the second modulation format corresponds to PAM2, and the third modulation format corresponds to PAM4.

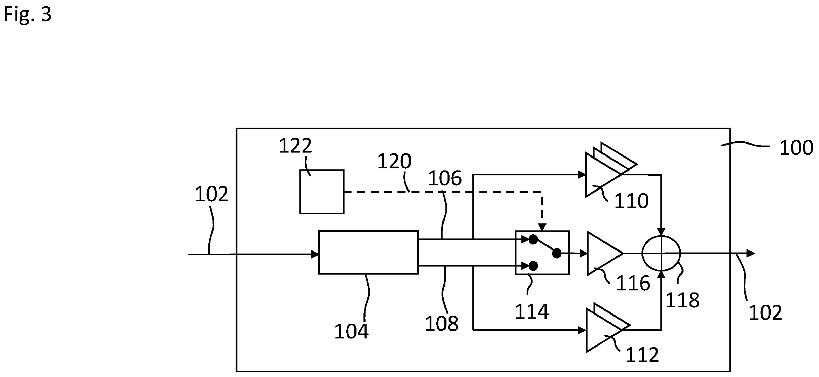

Figure 3 schematically depicts a transmitter 100, i.e. an apparatus, for transmitting segments for a downstream transmission for a passive optical network. According to an example, the transmitter 100 is the OLT.

The transmitter 100 is configured for flexible modulation using the first modulation format and the second modulation format and the third modulation format.

The transmitter 100 is configured for transmitting segments of the first modulation format in a first mode of operation. The transmitter 100 is configured for transmitting segments of the second modulation format in the first mode of operation or in a second mode of operation. The transmitter 100 is configured for transmitting segments of the third modulation format in the second mode of operation.

The transmitter 100 is configurable for transmitting a segment of the second modulation format after a segment of the first modulation format and before a segment of the third modulation format. The transmitter 100 is configurable for transmitting a segment of the second modulation format after a segment of the third modulation format and before a segment of the first modulation format. These segments may be transmitted consecutively. Segments of other modulation formats may be transmitted between these segments.

The transmitter 100 may be configurable for switching from the first mode of operation to the second mode of operation during transmitting the segment of the second modulation format. The transmitter 100 may be configurable for switching from the second mode of operation to the first mode of operation during transmitting the segment of the second modulation format.

The transmitter 100 may be configured for applying the transmitting depending on a requirement of a receiver. According to some embodiment, the transmitter 100 is configured for receiving the requirement of the receiver.

Figure 3 depicts an exemplary transmitter 100 that is configured for flexible modulation using PAM2, PAM3, and PAM4.

The transmitter 100 comprises an input 102 that is configured for receiving input bits. The transmitter 100 is configured to determine a first signal stream 106 and a second signal stream 108 depending on the input bits.

The transmitter 100 is configured to apply a first gain 110 to the first signal stream 106. The transmitter 100 is configured to apply a second gain 112 to the second signal stream 108. The transmitter 100 comprises a switch 114 that is configured to apply selectively a third gain 116 to either the first signal stream 106 in the first mode of operation or to the second signal stream 108 in the second mode of operation. The transmitter 100 comprises a combiner 118 that is configured to combine the first signal stream 106 and the second signal stream 108 with a gain scaling that depends on the setting of the switch 114.

The transmitter may be configured to apply the first, second and third gain related to each other according to the ratios 3, 2, and 1 respectively.

The transmitter 100 is in one example configured to assign a 3/6th of a gain to the first signal stream 106, a 2/6th of the gain to the second signal stream 108, and to apply a 1/6th of the gain additionally to the first signal stream 106 for transmitting in the four-level pulse amplitude modulation format or to apply the 1/6th of the gain additionally to the second signal stream 108 for transmitting in the three-level pulse amplitude modulation format.

According to an example, the transmitter 100 is configured to operate the switch 114 to configure the transmitter 100 for operating in the first mode of operation or the second mode of operation.

According to an example, the transmitter 100 is configured to operate the switch 114 for applying the gain scaling.

According to an example, the transmitter 100 is configured to operate the switch 114 via a control signal 120. The transmitter 100 may comprise a controller 122 that is configured to provide the control signal 120. This controller may be configured to receive instructions to determine the control signal 120 and determine the control signal 120 depending on these instructions.

The transmitter 100 is configured to transmit an output 102 of the combiner 118.

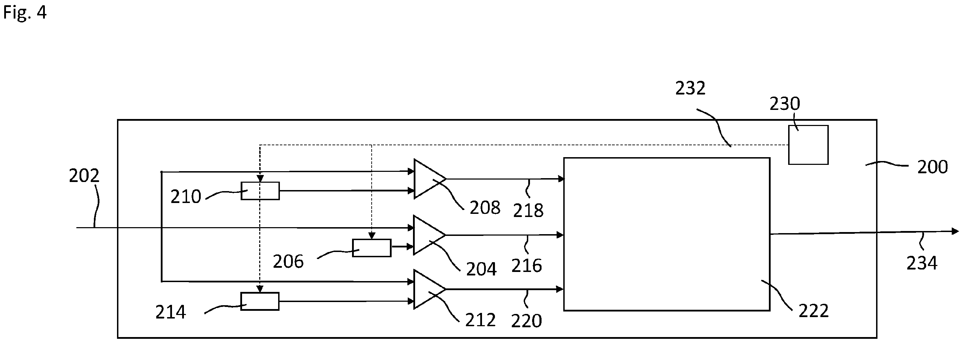

Figure 4 schematically depicts a receiver 200, i.e. an apparatus, for receiving segments of a downstream transmission for a passive optical network.

The receiver 200 is configured for using a first mode of operation for receiving segments of the first modulation format.

The receiver 200 is configured for using the first mode of operation or a second mode of operation for receiving segments of a second modulation format.

The receiver 200 is configured for using the second mode of operation for receiving segments of the third modulation format.

According to one example receiver 200 is configured for switching from the first mode of operation to the second mode of operation during receiving a segment of the second modulation format.

According to one example the receiver 200 is configured for switching from the second mode of operation to the first mode of operation during receiving a segment of the second modulation format.

Figure 4 depicts an exemplary receiver 200 that is configured for flexible modulation using PAM2, PAM3, and PAM4.

The receiver 200 is configured for using a first set of decision thresholds in the first mode of operation, and using a second set of decision thresholds in the second mode of operation.

The receiver 200 may be configured for sending a requirement to the downstream transmitter 100 for transmitting a segment of the second modulation format between a segment of the first modulation format and a segment of the third modulation format in order to enable the switching not having to be instantaneous at a segment boundary. Due to the presence of the second segment, the switching between modes doesn't have to be instantaneous at a segment boundary, but can be somewhere within the second segment.

The receiver 200 comprises an input 202 being a received downstream transmission comprising segments of data consisting of multiple modulation formats. The receiver 200 comprises a first slicer 204 having a first slicer level 206. The receiver 200 comprises a second slicer 208 having a second slicer level 210. The receiver 200 comprises a third slicer 212 having a third slicer level 214.

The receiver 200 is configured to provide an output 216 of the first slicer 204, an output 218 of the second slicer 208 and an output 220 of the third slicer 212 to a decoder 222.

The decoder 222 is configured to determine output bits depending on the outputs 216, 218, 220 of respectively the first 204, second 208 and third slicer 212.

According to an example, the receiver 200 comprises a controller 230 that is configured to switch via a control signal 232 the slicer levels 208, 210, 212 between a first set of values in the first mode of operation, and a second set of values in the second mode of operation.

According to some embodiment, the receiver 200 is configured to reconfigure itself to the proper modulation format.

The receiver 200 is configurable to use the first slicer level 206 set, for example, to the average of the incoming signal to decode the incoming symbol to the appropriate bits for receiving PAM2. The output 218 of the second slicer 208 and the output 220 of the third slicer 220 may be unused when receiving PAM2.

The receiver 200 is configurable to use the second slicer level 210 set to an appropriate level, higher than the first slicer level 214, and the third slicer level 214 to an appropriate level, lower than the first slicer level 210 to decode the incoming symbol to the appropriate bits for receiving PAM3. The output 216 of the first slicer 204 may be unused when receiving PAM3.

The receiver 200 is configurable to use the first slicer level 206, the second slicer level 210 set to an appropriate level, higher than the first slicer level 206, and the third slicer level 214 set to an appropriate level, lower than the first slicer level 206, to decode the incoming symbol to the appropriate bits for receiving PAM4.

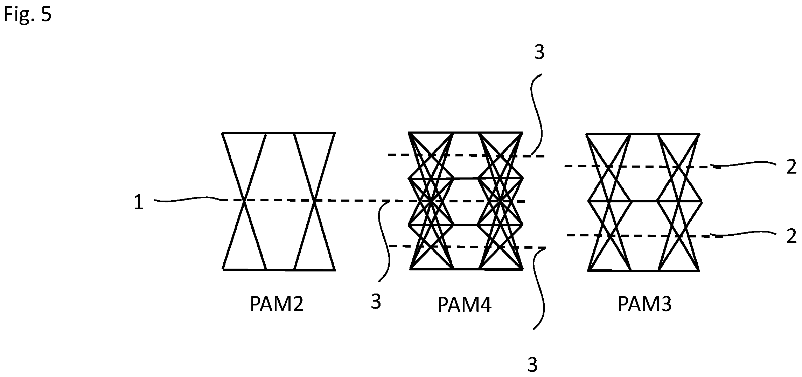

Figure 5 depicts the slicer level 1 for PAM2, the levels 2 for PAM3 and the slicer levels 3 for PAM4. In this example, the outer signal levels are the same level for PAM2, PAM3 and PAM4. An optimal location of the slicer levels may be determined and can change over time and applications.

Hence with the structure of the receiver 200 depicted in Figure 4, having 3 slicers, the three modulation formats PAM2, PAM3, and PAM4 can be decoded using appropriate postprocessing of the slicer information.

In the example, the receiver 200 is configurable to use different values for the different slicer levels. In the example, the second and third slicer levels 210, 214 for receiving PAM3 differs from the second and third slicer levels 210, 214 for receiving PAM4. In the example, the receiver 200 is configurable to use a first set of second and third slicer levels 210, 214 when receiving PAM3. In the example, the receiver 200 is configurable to use a second set of second and third slicer levels 210, 214 when receiving PAM4. As during the PAM2 modulation, the second slicer 208 and third slicer 212 may not be used, this reconfiguration may be transparent and without any loss of information during PAM2 modulation. Hence, the receiver 200 with this receiver architecture works optimally within a flexible modulation PON having three modulation formats.

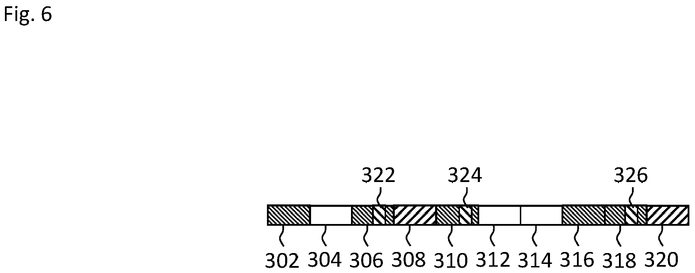

An exemplary scheduling of segments in a flexible modulation PON is depicted in Figure 6.

According to the example schedule, a PAM2 segment 302 is sent followed by a PAM4 segment 304, a PAM2 segment 306, a PAM3 segment 308, a PAM2 segment 310, a PAM4 segment 312, a PAM4 segment 314, a PAM2 segment 316, a PAM2 segment 318 and a PAM3 segment 320.

The transmitter 100 is configured for switching its mode of operation during the sending of a PAM2 segment. In the example, the transmitter 100 is configured to switch 322 its mode of operation in the PAM2 segment 306 from using the PAM4 modulation format to using the PAM3 modulation format. In the example, the transmitter 100 is configured to switch 324 its mode of operation in the PAM2 segment 310 from using the PAM3 modulation format to using the PAM4 modulation format. In the example, the transmitter 100 is configured to switch 326 its mode of operation in the PAM2 segment 318 from using the PAM4 modulation format to using the PAM3 modulation format.

The receiver 200 is configured for switching its mode of operation during the receiving of a PAM2 segment. In the example, the receiver 200 is configured to switch 322 its mode of operation in the PAM2 segment 306 from using the PAM4 modulation format to using the PAM3 modulation format. In the example, the receiver 200 is configured to switch 324 its mode of operation in the PAM2 segment 310 from using the PAM3 modulation format to using the PAM4 modulation format. In the example, the receiver 200 is configured to switch 326 its mode of operation in the PAM2 segment 318 from using the PAM4 modulation format to using the PAM3 modulation format.

In this example, PAM2 is considered as a buffer modulation. This means, a PAM2 segment is used as a buffer segment for switching the mode of operation.

In some embodiment, the flexible architecture of the transmitter 100 and of the receiver 200 is used for a flexible modulation system of different modulation formats than PAM3 and PAM4 where PAM2 is considered as the buffer modulation. For instance, PAM2 may be used as the second segment for PAM4 as first segment and PAM8 as third segment or vice-versa, or PAM3 may be used as the second segment for PAM5 as the first segment and PAM7 as the third segment or vice-versa.

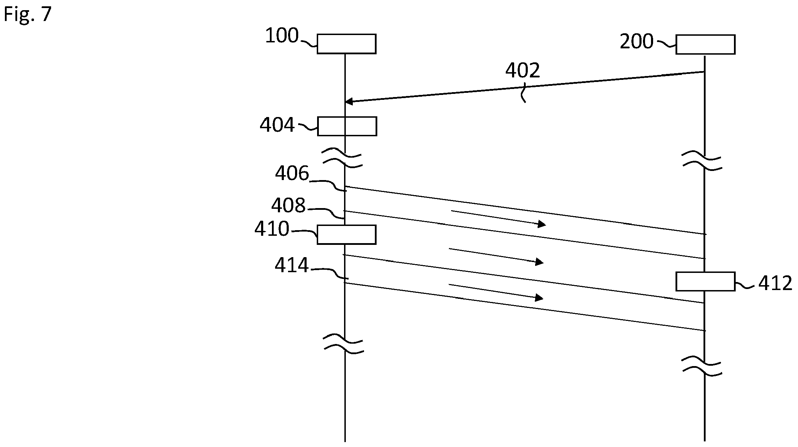

A method of transmitting and receiving segments in a downstream transmission for a passive optical network is described with reference to Figure 7. Figure 7 depicts a sequence diagram. The downstream transmission uses a continuous modulation wherein data is continuously sent.

Optionally, the method comprises a step 402 wherein the receiver 200 sends a requirement for transmitting the buffer modulation to the transmitter 100. This means, that the receiver 200 sends a message to indicate its capability, meaning its general requirement for having the buffer modulation to switch its mode. In the example, the receiver 200 sends the message once, e.g. at its initialization. This avoids sending an explicit request every buffer segment. Alternatively, the receiver may send multiple requests.

Optionally, the method comprises a step 404 wherein the transmitter 100 is configured depending on the requirement of the receiver 200.

With these optional steps, the transmitter 100 is configured depending on the requirement of the receiver 200.

In some embodiments, the requirement may be already known to the transmitter 100 before the method starts. The requirement may be for example stored or received from the receiver 200 beforehand or defined in a standard.

The method comprises step 406.

In step 406, the transmitter 100 transmits a first segment. The first segment is of the first modulation format. In the scheduling of segments according to figure 3, the first segment is for example the PAM4 segment 304. In the example, the transmitter 100 uses its first mode of operation for transmitting the first segment.

In the step 406, the receiver 200 receives the first segment. In the example, the receiver 200 uses its first mode of operation for receiving the first segment.

The method comprises a step 408.

In step 408, the transmitter 100 transmits a second segment. The second segment is of the second modulation format. The second segment is for example the PAM2 segment 306.

In the step 408, the receiver 200 receives the second segment.

The method comprises a step 410.

In step 410, the transmitter 100 switches from its first mode of operation to its second mode of operation during the transmission of the second segment.

The method comprises a step 412.

In step 412, the receiver 200 switches from its first mode of operation to its second mode of operation during the receiving of the second segment. The transmitter 100 may indicate the modulation of each segment up front. The receiver 200 may detect the buffer segments and then switch.

The method comprises a step 414.

In the step 414, the transmitter 100 transmits a third segment. The third segment is of the third modulation format. The third segment is e.g. the PAM3 segment 308. In the example, the transmitter 100 uses its second mode of operation for transmitting the third segment.

In the step 414, the receiver 200 receives the third segment. In the example, the receiver 200 uses its second mode of operation for receiving the first segment.

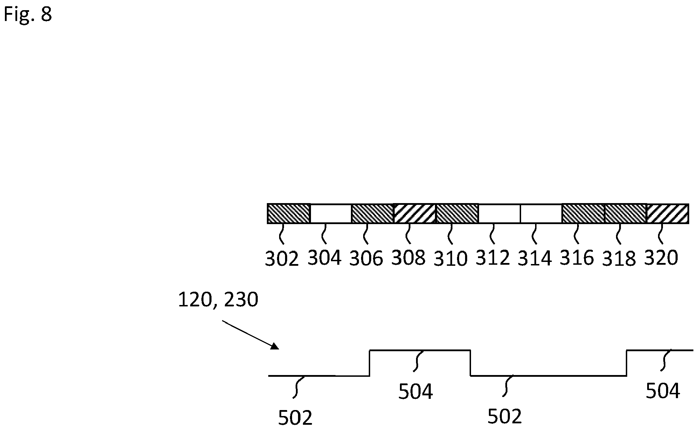

An example of the alignment of the control signals 120, 230 with respect to the intended transmitter modulation output is shown in Figure 8. These control signals 120, 230 are used to govern the alterations in the receiver 200.

The control signal 120, 230 each have a first level 502 governing the use of the first mode of operation and a second level 504 governing the use of the second mode of operation. The control signal 120, 230 alters from the first level 502 to the second level 504 during transmitting of the PAM2 segment 306. The control signal 120, 230 alters from the second level 504 to the first level 502 during transmitting of the PAM2 segment 310. The control signal 120, 230 alters from the first level 502 to the second level 504 during transmitting of the PAM2 segment 318.

According to some embodiment, the modulation scheduling, e.g. the schedule of alterations of the control signal 120, is known on beforehand by the transmitter 100, e.g. from the requirement.

## Claims

1. A method for use in an optical line terminal transmitting segments over a passive optical network, wherein the transmission is organized in segments, and wherein the method comprises transmitting a first segment (304) of a first modulation format, a second segment (306) of a second modulation format and a third segment (308) of a third modulation format, wherein the second segment (306) is transmitted between the first segment (304) and the third segment (308), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point.

2. The method according to claim 1, wherein the method comprises using (406) a first mode of operation for transmitting the first segment (304), using (414) a second mode of operation for transmitting the third segment (308), switching (410) from the first mode of operation to the second mode of operation during the transmission of the second segment (306).

3. The method according to claim 1 or 2, wherein the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

4. The method according to any one of claims 1 to 3, wherein the method comprises applying (404) the transmitting depending on a requirement of a receiver (200) .

5. The method according to claim 2 and 3, wherein a first gain is assigned to a first signal stream (106), wherein a second gain is assigned to a second signal stream (108), wherein in the first mode of operation a third gain is additionally applied to the first signal stream (106) for transmitting in the four-level pulse amplitude modulation format and wherein in the second mode of operation the third gain is additionally applied to the second signal stream (106) for transmitting in the three-level pulse amplitude modulation format.

6. The method according to claim 5, wherein the first, second and third gain are related to each other according to the ratios 3, 2, and 1.

7. An apparatus (100) for transmitting segments for a downstream transmission for a passive optical network, wherein the apparatus (100) is configured for transmitting a first segment (304) of a first modulation format, a second segment (306) of a second modulation format and a third segment (308) of a third modulation format, wherein the apparatus (100) is configured to transmit the second segment (306) between the first segment (304) and the third segment (308), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point.

8. The apparatus (100) according to claim 7, wherein the apparatus (100) is configured for acquiring a requirement for transmitting the second segment (306) between the first segment (304) and the third segment (308) in order to enable the switching.

9. A method of receiving segments of a downstream transmission in a passive optical network, wherein the method comprises receiving (406, 408, 414) a first segment (304) of a first modulation format, a second segment (306) of a second modulation format and a third segment (308) of a third modulation format, using (406) a first mode of operation for receiving the first segment (304), using (414) a second mode of operation for receiving the third segment (308), switching (412) from the first mode of operation to the second mode of operation during receiving the second segment (306), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point.

10. The method according to claim 9, wherein the second modulation format corresponds to a two-level pulse amplitude modulation, and wherein either the first modulation format corresponds to a four-level pulse amplitude modulation and the third modulation format corresponds to a three-level pulse amplitude modulation, or wherein the first modulation format corresponds to a three-level pulse amplitude modulation and the third modulation format corresponds to a four-level pulse amplitude modulation.

11. The method according to claim 9, wherein the method comprises using a first set of decision thresholds in the first mode of operation, and using (414) a second set of decision thresholds in the second mode of operation.

12. The method according to any one of claims 9 to 11, wherein the method comprises sending (402) a requirement for transmitting the second segment (306) between the first segment (304) and the third segment (308) in order to enable the switching.

13. An apparatus (200) for receiving segments of a downstream transmission in a passive optical network, wherein the apparatus (200) is configurable for receiving a first segment (304) of a first modulation format, a second segment (306) of a second modulation format and a third segment (308) of a third modulation format, using a first mode of operation for receiving the first segment (304), using a second mode of operation for receiving the third segment (308), switching from the first mode of operation to the second mode of operation during receiving the second segment (306), wherein the first modulation format comprises a first set of constellation points, wherein the second modulation format comprises a second set of constellation points, wherein the third modulation format comprises a third set of constellation points, wherein the second set is comprised in an intersection of the first set and the third set, wherein the first set and the third set differ by at least one constellation point.

14. A computer program comprising instructions, which, when executed by an apparatus cause the apparatus to perform the method of any of claims 1 to 6.

15. A computer program comprising instructions, which, when executed by an apparatus cause the apparatus to perform the method of any of claims 9 to 12.
